# EUROPEAN PATENT APPLICATION

(11) **EP 1 424 707 A2**
(43) Date of publication of application: **02.06.2004**
(21) Application number: 03026958.3
(22) Date of filing: 25.11.2003
(51) Int. Cl.: H01G 4/30

(54) **Thin metal layers-having ceramic green sheet and method for producing ceramic capacitor**

(30) Priority: 27.11.2002 JP 2002343754
(71) Applicant: NITTO DENKO CORPORATION, Osaka (JP)
(72) Inventor: Ouchi, Kazuo, Ibaraki-shi Osaka (JP); Oda, Takashi, Ibaraki-shi Osaka (JP); Okeyui, Takuji, Ibaraki-shi Osaka (JP)
(74) Representative: Grünecker, Kinkeldey, Stockmair & Schwanhäusser Anwaltssozietät

(57) **Abstract**

The invention provides a thin metal layers-having ceramic green sheet comprising: a base film; a first thin metal layer formed on the whole surface of the base film; a second thin metal layer formed on the first thin metal layer in the form of predetermined pattern; and a ceramic powder-dispersed layer which comprises a binder and a ceramic powder dispersed therein and which is formed on the metal films including the first thin metal layer and said second thin metal layer. Also disclosed is a method for producing a ceramic capacitor using a plurality of the thin metal layers-having ceramic green sheets.

## Description

### FIELD OF THE INVENTION

The present invention relates to a thin metal layers-having ceramic green sheet, and a method for producing a ceramic capacitor. More particularly, the invention relates to a thin metal layers-having ceramic green sheet suitably used for the production of a ceramic capacitor, and a method for producing a ceramic capacitor using the thin metal layers-having ceramic green sheet.

### BACKGROUND OF THE INVENTION

As a method for producing a ceramic capacitor, for example, Japanese Patent Nos. 2,990,621, 2,970,238, etc. disclose a method for producing a laminated ceramic capacitor having a thin metal layer of a predetermined pattern as an internal electrode by forming a thin metal layer in a predetermined pattern on a base film, forming a ceramic green sheet on the thin metal layer-containing base film surface so as to cover the thin metal layer, thereby forming a ceramic green sheet having the thin metal layer supported on the base film, subsequently, forming a laminate of a plurality of the thus obtained ceramic green sheets having the thin metal layers by sequentially superposing one on another after peeling the base film for each superposition, and then burning the resulting laminate.

More specifically, Japanese Patent No. 2,990,621 discloses a method for producing a laminated ceramic electronic component comprising ceramic green sheets and electrodes formed on the surfaces of the ceramic green sheets, which comprises the steps of (a) forming a first metal layer on a film by vapor deposition, (b) forming a second metal layer on the first metal layer by wet plating, (c) patterning the first and second metal layers, (d) coating the film with a ceramic slurry so as to cover the metal layers to form a ceramic green sheet, (e) press-bonding the metal-integrated green sheet supported on the film onto a ceramic green sheet or another metal-integrated green sheet to perform lamination, (f) peeling the film, and (g) burning the laminated ceramic green sheet.

Further, Japanese Patent No. 2,970,238 discloses a method for producing a laminated ceramic capacitor, which comprises: a first step of forming a metal film having a predetermined pattern on a base film by a thin film forming process; a second step of forming a ceramic dielectric layer on the base film so as to cover the metal film to prepare a green sheet having the base film; a third step of superposing the green sheet having the base film onto a dielectric sheet so that the dielectric sheet comes into contact with the ceramic dielectric layer of the green sheet having the base film, and then peeling the base film; a fourth step of superposing another green sheet having a base film obtained by the first step and the second step onto the green sheet obtained by the third step so that the ceramic dielectric layer of the former comes into contact with the latter, and then peeling the base film of the former in order to further perform lamination; a fifth step of repeating the operation of the fourth step in the same manner predetermined times to obtain a laminated green sheet; a sixth step of cutting the thus obtained green sheet to prepare a chip and burning the chip; and a seventh step of forming an external electrode on the chip.

However, at the time of burning the laminated ceramic green sheets in the above-mentioned methods, a binder in each ceramic green sheet disappears to cause contraction over the whole ceramic green sheet. At this time, a portion in which a thin metal layer serveing as an internal electrode is formed has a different contraction percentage from a portion in which no thin metal layer is formed, which causes non-uniform contraction to induce strain over the whole ceramic green sheet. This sometimes results in separation between the internal electrode and an insulating layer, separation between upper and lower insulating layers or occurrence of internal cracks in the insulating layer in the resulting laminated ceramic capacitor.

Further, when the ceramic green sheet is formed on the base film, a slurry for the ceramic green sheet is first applied onto the base film. However, the slurry may sometime be repelled on a surface of the base film, resulting in failure to obtain a uniform coating, because the wettability of the slurry to the surface of the base film is low.

Furthermore, in the case where a mask film is formed on the base film for forming the thin metal layer, the formation of the thin metal layer may run over a predetermined wiring circuit pattern unless the adhesion between the base film and the mask film is sufficient.

### SUMMARY OF THE INVENTION

The invention has been made in view of the circumstances as described above.

Accordingly, an object of the invention is to provide a thin metal layers-having ceramic green sheet which uniformly contracts upon burning a laminated ceramic powder-dispersed layer so as to prevent the separation between an internal electrode and an insulating layer, the separation between upper and lower insulating layers or the occurrence of internal cracks in the insulating layer, in which the ceramic powder-dispersed layer is uniformly formed, and further in which the thin metal layer is formed as a high-precision pattern.

Another object of the invention is to provide a method for producing a ceramic capacitor using the thin metal layers-having ceramic green sheet.

Other objects and effects of the invention will become apparent from the following description.

In order to achieved the above-described objects, the present invention provides a thin metal layers-having ceramic green sheet comprising:
a base film;
a first thin metal layer formed on the whole surface of said base film;
a second thin metal layer formed on said first thin metal layer in the form of predetermined pattern; and
a ceramic powder-dispersed layer, comprising a binder and a ceramic powder dispersed therein, and being formed on the first thin metal layer surface including the second thin metal layer surface.

According to such thin metal layers-having ceramic green sheets, when they are used in the production of a ceramic capacitor and the whole ceramic powder-dispersed layers contract due to disappearance of the binder contained therein upon burning a laminate obtained by stacking the ceramic green sheets, an uniform contraction percentage can be assured by the respective first thin metal layers intervening between the neighboring ceramic powder-dispersed layers over the whole surfaces thereof, thereby allowing the whole ceramic powder-dispersed layers to contract uniformly. Accordingly, the separation between the internal electrode and the insulating layer, the separation between the upper and lower insulating layers or the occurrence of internal cracks in the insulating layer, caused by a non-uniform contraction can be effectively prevented.

Further, the ceramic powder-dispersed layer is formed on the first thin metal layer surface including the second thin metal layer surface, not on the base film. Accordingly, for example, when the ceramic powder-dispersed layer is formed by applying a slurry therefor onto the first thin metal layer surface including the second thin metal layer surface in the production of the thin metal layers-having ceramic green sheet, good wettability between the slurry and the first thin metal layer surface including the second thin metal layer surface makes it possible to form the ceramic powder-dispersed layer uniformly.

Still further, the second thin metal layer is formed on the first thin metal layer, not on the base film. Accordingly, for example, when the second thin metal layer is formed in the form of predetermined pattern by use of a mask film, good adhesion can be assured between the first thin metal layer and the mask film to thereby form the second thin metal layer as a high-precision pattern.

Furthermore, in the invention, it is preferred that a resin layer is provided between the base film and the first thin metal layer.

When the resin layer is provided between the base film and the first thin metal layer, the first thin metal layer including the second thin metal layer can be formed on the resin layer, not on the base film. Accordingly, when the base film is peeled in the production of the ceramic capacitor, the base film can be peeled at an interface with the resin layer, so that damages of the first thin metal layer including the second thin metal layer upon peeling the base film can be prevented.

Further, in the invention, it is preferred that the resin layer comprises a material substantially the same as the binder of the ceramic powder-dispersed layer.

In the case where the resin layer is constituted by a material substantially the same as the binder of the ceramic powder-dispersed layer, the resin layer material can be allowed to disappear under the same conditions as those for the binder at the time of burning a laminate obtained by stacking the thin metal layers-having ceramic green sheets in the production of the ceramic capacitor.

Further, it is preferred that the first thin metal layer has a thickness of 0.001 to 1.0 µm.

When the first thin metal layer has a thickness of 0.001 to 1.0 µm, a portion of the first thin metal layer on which the second thin metal layer is not formed can be surely spheroidized or segmentalized at the time of burning a laminate obtained by stacking the thin metal layers-having ceramic green sheets in the production of the ceramic capacitor. Accordingly, the continuity caused by the first thin metal layer can be surely prevented, and the sure continuity of the second thin metal layer formed in the form of predetermined pattern can be ensured. Thus, the reliability of the ceramic capacitor using the thin metal layers-having ceramic green sheets can be improved.

Further, in the invention, it is preferred that the thickness of the second thin metal layer is twice or more that of the first thin metal layer.

When the thickness of the second thin metal layer is less than twice that of the first thin metal layer, the spheroidizing or segmentalization of the first thin metal layer may become predominant at the time of burning a laminate obtained by stacking the thin metal layers-having ceramic green sheets in the production of the ceramic capacitor, to thereby cause damage to the second thin metal layer. However, when the thickness of the second thin metal layer is twice or more that of the first thin metal layer, such damage can be prevented to ensure the sure formation of the internal electrode.

Further, the invention also provides a method for producing a ceramic capacitor comprising the steps of:
preparing a plurality of the above-described thin metal layers-having ceramic green sheets;
peeling the base film of one of said plurality of thin metal layers-having ceramic green sheets;
superposing another thin metal layers-having ceramic green sheet on said base film-peeled ceramic green sheet by bringing the ceramic powder-dispersed layer of said another ceramic green sheet into contact with the first thin metal layer or resin layer of said base film-peeled ceramic green sheet;
repeating said peeling step and said superposing step predetermined times to form a laminated product of said plurality of ceramic green sheets; and
burning said laminated product.

According to such a method for producing the ceramic capacitor, the whole ceramic powder-dispersed layers can be allowed to contract uniformly in the step of burning the laminate of the thin metal layers-having ceramic green sheets, because the thin metal layers-having ceramic green sheets of the invention are used. Accordingly, the separation between the internal electrode and the insulating layer, the separation between the upper and lower insulating layers or the occurrence of internal cracks in the insulating layer, caused by the non-uniform contraction can be effectively prevented, thus making it possible to produce the ceramic capacitor having high reliability.

### BRIEF DESCRIPTION OF THE DRAWINGS

Figs. 1 constitute a flow chart showing one embodiment of a method for producing one example of the thin metal layers-having ceramic green sheet of the invention, wherein:
   Fig. 1(a) indicates the step of preparing a base film;
   Fig. 1(b) indicates the step of forming a resin layer on the base film;
   Fig. 1(c) indicates the step of forming a first thin metal layer on the whole surface of the rein layer;
   Fig. 1(d) indicates the step of forming a second thin metal layer on the first thin metal layer in the form of a predetermined wiring circuit pattern; and
   Fig. 1(e) indicates the step of forming a ceramic powder-dispersed layer on the first thin metal layer surface including the second thin metal layer surface.
Figs. 2 constitute a flow chart showing one embodiment of the step of forming the second thin metal layer on the first thin metal layer in the form of the predetermined wiring circuit pattern, which is indicated by Fig. 1(d), in the production method of the thin metal layers-having ceramic green sheet shown in Figs. 1, wherein:
   Fig. 2(a) indicates the step of forming a plating resist on the first thin metal layer in a pattern reverse to the wiring circuit pattern;
   Fig. 2(b) indicates the step of forming the second thin metal layer by plating on the first thin metal layer exposed from the plating resist as the wiring circuit pattern; and
   Fig. 2(c) indicates the step of removing the plating resist.
Figs. 3 constitute a flow chart showing one embodiment of the production method of a ceramic capacitor of the invention, wherein:
   Fig. 3(a) indicates the step of peeling a base film of a first ceramic green sheet having thin metal layers;
   Fig. 3(b) indicates the step of superposing a second ceramic green sheet having thin metal layers on the first ceramic green sheet having thin metal layers so that the surface of the ceramic powder-dispersed layer of the second ceramic green sheet having thin metal layers comes into contact with the surface of the resin layer of the first ceramic green sheet having thin metal layers;
   Fig. 3(c) indicates the step of peeling the base film of the second ceramic green sheet having thin metal layers,
   Fig. 3(d) indicates the step of stacking a desired number of thin metal layers-having ceramic green sheets; and
   Fig. 3(e) indicates the step of burning.
Fig. 4 is a schematic cross sectional view showing one embodiment of a laminated ceramic capacitor obtained by the production method of the ceramic capacitor shown in Fig. 3.
Figs. 5 constitute a flow chart showing one embodiment of a method for producing another example of the thin metal layers-having ceramic green sheet of the invention, wherein:
   Fig. 5(a) indicates the step of preparing a base film;
   Fig. 5(b) indicates the step of forming a first thin metal layer on the whole surface of the base film;
   Fig. 5(c) indicates the step of forming a second thin metal layer on the first thin metal layer in the form of a predetermined wiring circuit pattern; and
   Fig. 5(d) indicates the step of forming a ceramic powder-dispersed layer on the first thin metal layer surface including the second thin metal layer surface.
Figs. 6 constitute a flow chart showing the method for producing the thin metal layers-having ceramic green sheet of Comparative Example 1, wherein:
   Fig. 6(a) indicates the step of preparing a base film;
   Fig. 6(b) indicates the step of forming a first thin metal layer on the whole surface of the base film;
   Fig. 6(c) indicates the step of forming a second thin metal layer on the first thin metal layer in the form of a predetermined wiring circuit pattern;
   Fig. 6(d) indicates the step of processing the first thin metal layer into the form of the predetermined wiring circuit pattern; and
   Fig. 6(e) indicates the step of forming a ceramic powder-dispersed layer on the base film surface containing the second thin metal layer surface.
Figs. 7 constitute a flow chart showing the method for producing the thin metal layers-having ceramic green sheet of Comparative Example 2, wherein:
   Fig. 7(a) indicates the step of preparing a base film;
   Fig. 7(b) indicates the step of forming a resin layer on the base film;
   Fig. 7(c) indicates the step of forming a first thin metal layer on the whole surface of the resin layer;
   Fig. 7(d) indicates the step of forming a second thin metal layer on the first thin metal layer in the form of a predetermined wiring circuit pattern;
   Fig. 7(e) indicates the step of processing the first thin metal layer into the form of the predetermined wiring circuit pattern; and
   Fig. 7(f) indicates the step of forming a ceramic powder-dispersed layer on the resin layer surface including the second thin metal layers surface.

### DETAILED DESCRIPTION OF THE INVENTION

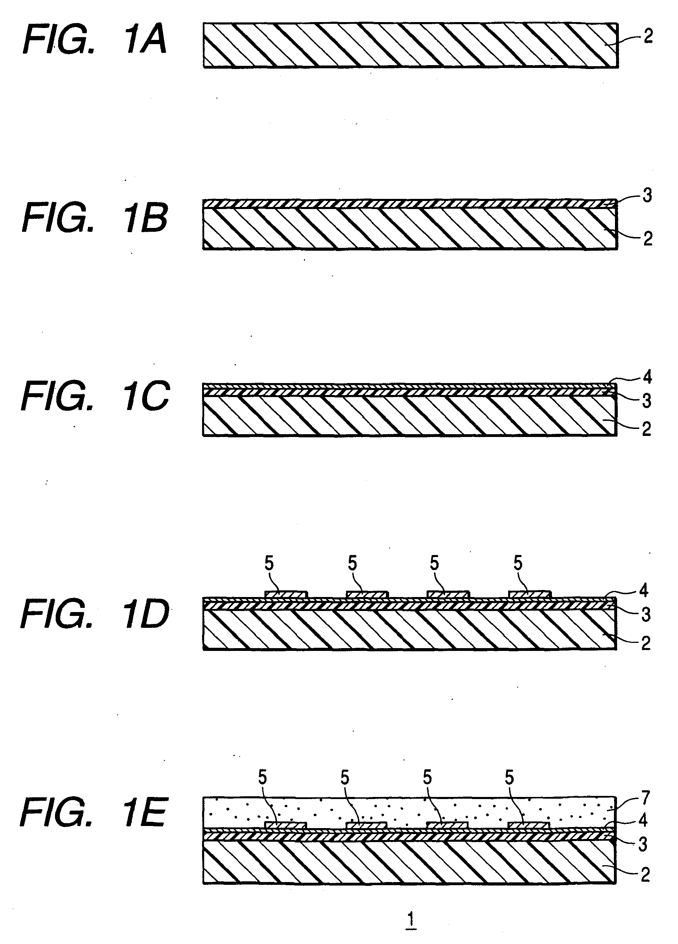

Figs. 1 constitute a flow chart showing one embodiment of a method for producing one example of the thin metal layers-having ceramic green sheet of the invention. Referring to Figs. 1, the method for producing one example of the thin metal layers-having ceramic green sheet of the invention is described below.

First, in this method, a base film 2 is prepared as shown in Fig. 1(a).

There is no particular limitation on the base film 2, and examples thereof include known plastic films such as a polyethylene film, a polypropylene film, a polystyrene film, a polyvinyl chloride film, a polyethylene terephthalate film, a polycarbonate film, a TPX (methylpentene resin) film, an alkyd resin film, a polyimide film, a polysulfone film, a polyethersulfone film, a polyamide film, a polyamideimide film, a polyetherketone film and a polyphenylene sulfide film. Although there is no particular limitation on the thickness of the base film 2, it is, for example, preferably from 5 to 500 µm, and more preferably from 10 to 100 µm.

As the base film 2, a film having a surface which has been subjected to a mold releasing treatment is preferably used. As the mold releasing treatment, a known mold releasing treatment is preferably used. For example, a release agent such as a silicone compound, a silicone fluoride compound, a fluorine-containing compound or a long-chain alkyd compound can be applied onto the surface of the base film 2. Incidentally, plastic films having mold releasability such as polypropylene films or TPX films may be used as such without any mold releasing treatment.

Then, in this method, a resin layer 3 is formed on the base film 2 as shown in Fig. 1(b).

The resin forming the resin layer 3 is a resin which disappears at the time of burning a laminate obtained by stacking the thin metal layers-having ceramic green sheets 1 in the production of a ceramic capacitor 11 described later, and is not particularly limited as long as it is a resin having good release properties with respect to the base film 2. Examples thereof include cellulose resins such as ethyl cellulose, hydroxypropyl cellulose and carboxymethyl cellulose, acrylic resins such as butyl methacrylate and methyl methacrylate, polyvinyl butyral resins, polyvinyl alcohol resins, vinyl acetate resins and urethane resins.

These resins can be used either alone or as a combination of two or more thereof.

Further, the resin forming the resin layer 3 is preferably the same material as the binder of the ceramic powder-dispersed layer 7 described later. When the resin is the same material as the binder of the ceramic powder-dispersed layer 7, it can be allowed to disappear under the same conditions as those for the binder at the time of burning the laminate obtained by stacking the thin metal layers-having ceramic green sheets 1 in the production of the ceramic capacitor 11.

There is no particular limitation on the method of forming the resin layer 3 on the base film 2. For example, the resin layer can be formed by preparing a solution of the resin, applying the solution onto the base film 2, and drying the applied solution.

There is no particular limitation on the method of preparing the solution of the resin. For example, the above-mentioned resin may be dissolved in a solvent that is the same as or similar to a dispersing medium for the binder described later so as to give a resin concentration (solid concentration) of 1 to 50% by weight, preferably 3 to 30% by weight.

Further, for coating the solution of the resin, known methods such as spin coating, doctor blade coating and spray coating can be used.

The drying temperature after coating can be appropriately selected depending on the type of the resin or solvent and is, for example, from 40 to 200°C, and preferably from 60 to 150°C.

The thickness of the resin layer 3 thus formed is, for example, preferably from 0.1 to 1.0 µm, and more preferably from 0.1 to 0.5 µm. When the thickness of the resin layer 3 is within such a range, the good release properties of the base film 2 can be ensured.

Then, in this method, a first thin metal layer 4 is formed on the whole surface of the resin layer 3.

There is no particular limitation on the metal forming the first thin metal layer 4, as long as it is a metal used as an internal electrode of the laminated ceramic capacitor 11, and examples thereof include copper, nickel, chromium, palladium or alloys thereof.

Although there is no particular limitation on the method of forming the first thin metal layer 4 on the resin layer 3, for example, vacuum film formation such as vacuum deposition, ion plating or sputtering can be used. When the first thin metal layer 4 is formed by the vacuum film formation, a portion of the first thin metal layer 4 on which the second thin metal layer 5 is not formed (a portion composed of the first thin metal layer 4 alone) can be surely spheroidized or segmentalized, for example, to a particle size of about 1 nm to about 10 µm, at the time of burning the laminate obtained by stacking the thin metal layers-having ceramic green sheets 1 in the production of the laminated ceramic capacitor 11.

The thickness of the first thin metal layer 4 thus formed is, for example, preferably from 0.001 to 1.0 µm, and more preferably from 0.05 to 0.2 µm. When the thickness of the first thin metal layer 4 is within such a range, the first thin metal layer 4 can be surely spheroidized or segmentalized at the time of burning the laminate obtained by stacking the thin metal layers-having ceramic green sheets 1 in the production of the laminated ceramic capacitor 11.

Then, in this method, the second thin metal layer 5 is formed on the first thin metal layer 4 in the form of a predetermined wiring circuit pattern as shown in Fig. 1(d).

There is no particular limitation on the metal forming the second thin metal layer 5, as long as it is a metal used as the internal electrode of the laminated ceramic capacitor 11, and examples thereof include copper, nickel, chromium, palladium or alloys thereof, similarly to the first thin metal layer 4. The metal forming the second thin metal layer 5 may be the same as or different from the metal forming the first thin metal layer 4.

There is no particular limitation on the method of forming the second thin metal layer 5 in the form of a predetermined wiring pattern on the first thin metal layer 4. For example, it can be formed by first forming a plating resist 6 on the first thin metal layer 4 in a pattern reverse to the wiring circuit pattern, and then forming the second thin metal layer 5 by plating on the remaining surface of the first thin metal layer 4 exposed as the wiring circuit pattern, using the plating resist 6 as a mask, followed by removal of the plating resist 6.

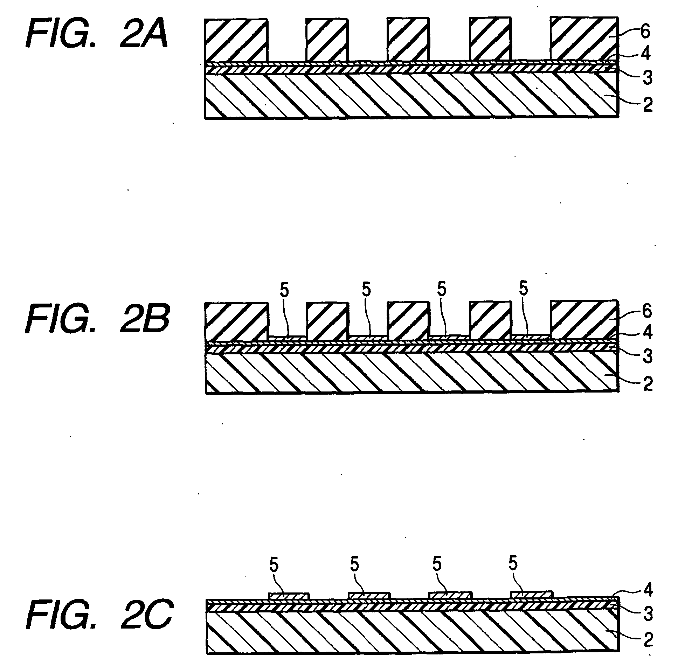

More specifically, first, the plating resist 6 is formed on the first thin metal layer 4 in a pattern reverse to the wiring circuit pattern (in a reversal pattern) as shown in Fig. 2(a). There is no particular limitation on the method of forming the plating resist 6. For example, a printing method or a dry film method can be used.

Further, although there is no particular limitation on the thickness of the plating resist 6, it is, for example, preferably from 1 to 100 µm, and more preferably from 5 to 25 µm.

Then, the second thin metal layer 5 is formed by plating on the remaining surface of the first thin metal layer 4 exposed from the plating resist 6 as the wiring circuit pattern (i.e., the pattern reverse to that of the plating resist 6), as shown in Fig. 2(b).

Although the manner of the plating is not particularly limited and either electrolytic plating or non-electrolytic plating may be employed, electrolytic plating using the first thin metal layer 4 as an electrode is preferred. If the second thin metal layer 5 is formed by plating, the temperature at which the spheroidizing or segmentalization of the second thin metal layer 5 is initiated becomes higher than that in the case where the second thin metal layer 5 is formed by the vacuum film formation. Accordingly, the spheroidizing or segmentalization of a portion of the first thin metal layer 4 on which the second thin metal layer 5 is formed can be prevented at the time of burning the laminate obtained by stacking the thin metal layers-having ceramic green sheets 1 in the production of the ceramic capacitor 11.

According to the foregoing process for forming the second thin metal layer 5, the plating resist 6 can be formed on the first thin metal layer 4, not on the base film 2, followed by plating, so that the first thin metal layer 4 can be adhered well to the plating resist 6 to form the second thin metal layer 5 as a high-precision wiring circuit pattern.

Then, the thickness of the second thin metal layer 5 thus formed in the form of the predetermined wiring circuit pattern is, for example, preferably from 0.002 to 2.0 µm, and more preferably from 0.1 to 0.6 µm. Further, the thickness of the second thin metal layer 5 is preferably twice or more that of the first thin metal layer 4, and more preferably 3 to 10 times.

When the thickness of the second thin metal layer 5 is less than twice that of the first thin metal layer 4, the spheroidizing or segmentalization of the first thin metal layer 4 may become predominant at the time of burning the laminate obtained by stacking the thin metal layers-having ceramic green sheets 1 in the production of the ceramic capacitor 11, to thereby cause damages to the second thin metal layer 5. However, when the thickness of the second thin metal layer 5 is twice or more that of the first thin metal layer 4, such damages can be prevented to ensure the sure formation of the internal electrode.

Further, the second thin metal layer 5 can also be formed to have a multilayer structure of two or more layers depending on its purpose and use.

Then, the plating resist 6 is removed as shown in Fig. 2(c). There is no particular limitation on the method of removal of the plating resist 6. For example, the plating resist 6 can be peeled or etched off.

In this method, the ceramic powder-dispersed layer 7 is formed on the surface of the first thin metal layer 4 including the surface of the second thin metal layer 5, thereby obtaining the thin metal layers-having ceramic green sheet 1, as shown in Fig. 1(e).

There is no particular limitation on the method of forming the ceramic powder-dispersed layer 7. For example, it can be formed by preparing a slurry containing at least ceramic powder and a binder, and applying this slurry onto the whole surface of the first thin metal layer 4 including the surface of the second thin metal layer 5, followed by drying.

There is no particular limitation on the preparation method of the slurry, as long as it is a method for preparing a slurry used in the production of a ceramic green sheet. For example, it can be prepared by blending ceramic powder and a binder in a dispersing medium (solvent), followed by mixing.

There is no particular limitation on the ceramic powder, and examples thereof include dielectric ceramic powders such as a barium titanate powder, a strontium titanate powder and a lead titanate powder, magnetic ceramic powders such as a ferrite powder, piezoelectric ceramic powders and insulating ceramic powders such as alumina and silica. The ceramic powders can be used either alone or as a combination of two or more thereof, and specifically, they can be appropriately selected depending on their purpose and use.

There is no particular limitation on the binder, and examples thereof include resins similar to those which form the resin layer 3 described above, i.e., cellulose resins such as ethyl cellulose, hydroxypropyl cellulose and carboxymethyl cellulose, acrylic resins such as butyl methacrylate and methyl methacrylate, polyvinyl butyral resins, polyvinyl alcohol resins, vinyl acetate resins and urethane resins. The binders can be used either alone or as a combination of two or more thereof, and specifically, they can be appropriately selected depending on their purpose and use.

The dispersing media include, for example, water, alcoholic solvents such as methanol, ethanol, propanol, isopropanol and butyl alcohol, glycolic solvents such as ethylene glycol, methyl cellosolve, ethyl cellosolve, methyl carbitol and ethyl carbitol, ketone solvents such as acetone, methyl ethyl ketone and methyl isobutyl ketone, ester solvents such as ethyl acetate and butyl acetate, aromatic solvents such as benzene, toluene, xylene and solvent naphtha, and polar solvents such as dimethylformamide, dimethylacetamide, dimethyl sulfoxide, acetonitrile and N-methylpyrrolidone. The dispersing media can be used either alone or as a combination of two or more thereof.

In the preparation of the slurry, known additives such as a plasticizer and a dispersing agent can be appropriately added, depending on its purpose and use. For example, there is no particular limitation on the plasticizer, and examples thereof include polyethylene glycol and derivatives thereof, fatty acid esters, phthalic esters and phosphoric esters.

Although there is no particular limitation on the preparation method of the slurry, it can be prepared, for example, by blending and mixing the above-mentioned respective components by use of a known powder mixing device such as a bead mill, a ball mill or a sand mill. The blending ratio of each component is not particularly limited, and can be appropriately selected depending on its purpose and use.

In this method, the slurry thus prepared is applied to the whole surface of the first thin metal layer 4 including the surface of the second thin metal layer 5, and then dried, thereby forming the ceramic powder-dispersed layer 7.

The method of applying the slurry to the whole surface of the first thin metal layer 4 including the surface of the second thin metal layer 5 is not particularly limited. For example, a known coating method such as doctor blade coating or roll coating can be used.

Thus, the ceramic powder-dispersed layer 7 is formed on the surface of the first thin metal layer 4 including the surface of the second thin metal layer 5, not on the base film 2. Accordingly, when the slurry is applied onto the first thin metal layer 4 including the second thin metal layer 5, good wettability between the slurry and the first thin metal layer 4 including the second thin metal layer 5 can be ensured. It is therefore possible to uniformly form the ceramic powder-dispersed layer 7.

Further, the drying temperature of the slurry applied is not particularly limited, and the slurry can be dried, for example, at a temperature of from 50 to 200°C, and preferably at a temperature of from 80 to 150°C.

According to the thin metal layers-having ceramic green sheet 1 thus obtained, when the base film 2 is peeled in the production of the laminated ceramic capacitor 11, the base film 2 can be peeled at an interface with the resin layer 3, because the first thin metal layer 4 including the second thin metal layer 5 is formed on the resin layer 3, not on the base film 2. Accordingly, damages of the first thin metal layer 4 including the second thin metal layer 5 upon peeling the base film 2 can be prevented.

Further, according to the thin metal layers-having ceramic green sheet 1 thus obtained, when the whole ceramic powder-dispersed layers 7 contract by disappearance of the binder in the ceramic powder-dispersed layers 7 at the time of burning the laminate obtained by stacking the ceramic green sheets 1 in the production of the laminated ceramic capacitor 11, an uniform contraction percentage can be assured by the respective first thin metal layers 4 intervening between the neighboring ceramic powder-dispersed layers 7 over the whole surfaces thereof, thereby allowing the whole ceramic powder-dispersed layers 7 to contract uniformly. Accordingly, the separation between the internal electrode 12 and an insulating layer 13, the separation between the upper and lower insulating layers 13 or the occurrence of internal cracks in the insulating layer 13, caused by the non-uniform contraction can be effectively prevented.

Accordingly, the thin metal layers-having ceramic green sheets 1 can be suitably used in a production method of the laminated ceramic capacitor 11, which comprises sequentially stacking a plurality of the thin metal layers-having ceramic green sheets 1 after peeling a base film 2 for each superposition, and then burning the resulting laminate, thereby producing the laminated ceramic capacitor 11.

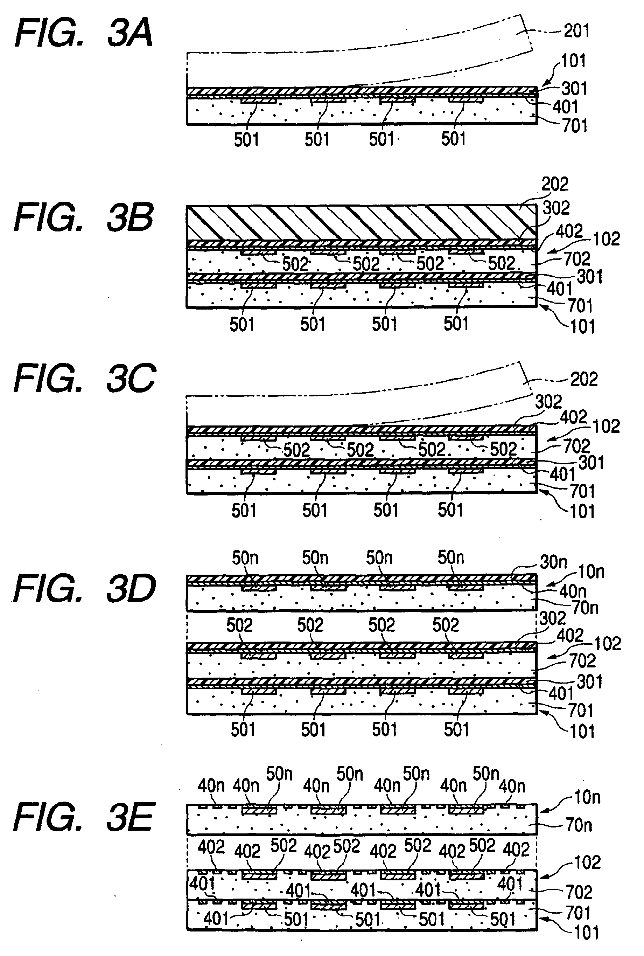

Such a method for producing the laminated ceramic capacitor 11 is described below by reference to Figs. 3. In Figs. 3, in order to distinguish a plurality of thin metal layers-having ceramic green sheets 1 from one another, a first ceramic green sheet having thin metal layers is designated as 101, a second ceramic green sheet having thin metal layers as 102, ..., and an "n"th ceramic green sheet having thin metal layers as 10n, for convenience.

In this method, a plurality of thin metal layers-having ceramic green sheets 1 are prepared, and the base film 201 of a first ceramic green sheet 101 having thin metal layers is peeled as shown in Fig. 3(a). Thereby, the base film 201 is easily released from the interface with the surface of the resin layer 301. Accordingly, damage of the first thin metal layer 4 including the second thin metal layer 5 upon peeling the base film 2 can be effectively prevented.

Then, in this method, a second ceramic green sheet 102 with thin metal layers is superposed on the first ceramic green sheet 101 having thin metal layers so that the surface of the ceramic powder-dispersed layer 702 of the second ceramic green sheet 102 having thin metal layers comes into contact with the surface of the resin layer 301 of the first ceramic green sheet 101 having thin metal layers, as shown in Fig. 3(b).

Then, the resulting stack is subjected to press-bonding with heat. The thermal press-bonding can be carried out, for example, under conditions of 2 to 70 MPa and 50 to 150°C.

Thereafter, in this method, the base film 202 of the second ceramic green sheet 102 having thin metal layers is peeled in the same manner as described above, as shown in Fig. 3(c).

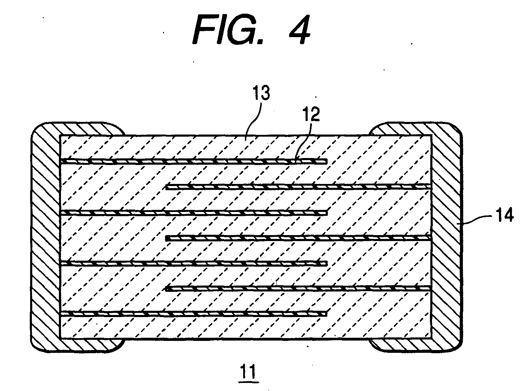

Then, in this method, the laminating operation is repeated to a desired number of the thin metal layers-having green sheets (n sheets) in the same manner as described above, as shown in Fig. 3(d), followed by cutting to a chip form as needed. The resulting laminate is then subjected to burning treatment at a disappearing temperature (a temperature of destruction by fire) of the binder of the resin layer 3 and the ceramic powder-dispersed layer 7 or higher (for example, about 400°C to about 1,500°C), thereby allowing the resin layer 3 and the ceramic powder-dispersed layer 7 to disappear (to be burnt up) and, at the same time, spheroidizing or segmentalizing the portions of the first thin metal layer 4 on which the second thin metal layer 5 is not formed (the portions composed of the first thin metal layer 4 alone) as shown in Fig. 3(e). Thus, a laminated ceramic capacitor 11 as shown in Fig. 4 is produced.

The respective first thin metal layers 4 intervene between the neighboring ceramic powder-dispersed layers 7 over the whole surfaces of the respective interfaces. Accordingly, when the respective ceramic powder-dispersed layers 7 contract by disappearance of the binder in the ceramic powder-dispersed layers 7 during the above-described burning step, uniform contraction as a whole can be ensured. Therefore, in the resulting laminated ceramic capacitor 11, the separation between the internal electrode 12 and an insulating layer 13, the separation between the upper and lower insulating layers 13 or the occurrence of internal cracks in the insulating layer 13, caused by the non-uniform contraction can be effectively prevented.

Further, in this burning step, the spheroidizing of the portions of the first thin metal layer 4 on which the second thin metal layer 5 is formed (the portions composed of the second thin metal layer 5 and the first thin metal layer 4) is inhibited, so that high-precision wiring circuit patterns are formed by the second thin metal layer 5 and the first thin metal layer 4. On the other hand, the portions of the first thin metal layer 4 on which the second thin metal layer 5 is not formed (the portions composed of the first thin metal layer 4 alone) are spheroidized or segmentalized to form insulating portions, which surely prevents the continuity caused by the first thin metal layer 4 alone and can ensure the sure continuity of the second thin metal layer 5 formed in the form of predetermined patterns. Accordingly, the reliability of the ceramic capacitor 11 using the thin metal layers-having ceramic green sheets 1 can be improved.

Fig. 4 schematically shows a cross sectional view taken in the direction orthogonal to Figs. 3. In this laminated ceramic capacitor 11, the second thin metal layer 5 (including the portions of the first thin metal layer 4 on which the second thin metal layer 5 is formed) forms the internal electrodes 12, and the binder of the resin layer 3 and the ceramic powder-dispersed layer 7 is allowed to disappear at the time of burning to form the insulating layers 13. Accordingly, a laminated structure in which the internal electrodes 12 and the insulating layers 13 are alternately laminated is obtained. Further, in this laminated ceramic capacitor 11, external electrodes 14 are formed on both ends thereof after burning.

In the method for producing the laminated ceramic capacitor 11 according to the invention, since the above-mentioned thin metal layers-having ceramic green sheets 1 are used, the separation between the internal electrode 12 and the insulating layer 13, the separation between the upper and lower insulating layers 13 or the occurrence of internal cracks in the insulating layer 13, caused by the non-uniform contraction can be effectively prevented, thus making it possible to produce the ceramic capacitor 11 having high reliability.

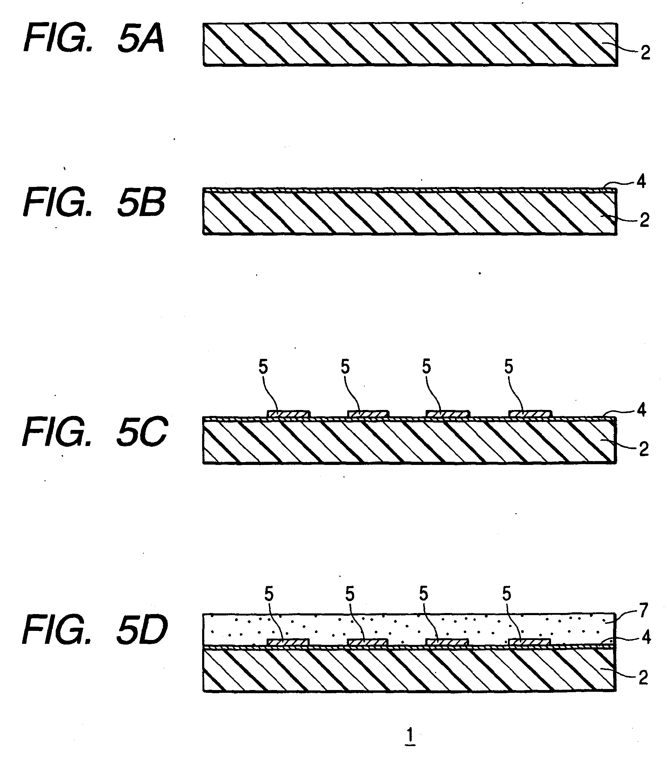

In the above description, the resin layer 3 is provided between the base film 2 and the first thin metal layer 4 in the thin metal layers-having ceramic green sheet 1. However, for example, as shown in Fig. 5(d), the provision of the resin layer 3 between the base film 2 and the first thin metal layer 4 may be omitted. In the production of such a thin metal layers-having ceramic green sheet 1, for example, the step of forming the resin layer 3 on the base film 2 as shown in Fig. 1(b) is omitted and the process may be as follows. First, a base film 2 is prepared in the same manner as shown in Fig. 1(a) (see Fig. 5(a)), and a first thin metal layer 4 is formed on the whole surface of the base film 2 in a similar manner as shown in Fig. 1(c) (see Fig. 5(b)). Then, a second thin metal layer 5 is formed on the first thin metal layer 4 in the form of a predetermined wiring circuit pattern in a similar manner as shown in Fig. 1(d) (see Fig. 5(c)), and thereafter, a ceramic powder-dispersed layer 7 is formed on the first thin metal layer 4 including the second thin metal layer 5 in a similar manner as shown in Fig. 1(e) (see Fig. 5(d)).

Also according to the thin metal layers-having ceramic green sheet 1 thus obtained, an uniform contraction percentage can be assured by the respective first thin metal layers 4 intervening between the neighboring ceramic powder-dispersed layers 7 over the whole surfaces thereof, thereby allowing the whole ceramic powder-dispersed layers 7 to contract uniformly, at the time of burning the laminate obtained by stacking the ceramic green sheets 1 in the production of the laminated ceramic capacitor 11. Accordingly, the separation between the internal electrode 12 and the insulating layer 13, the separation between the upper and lower insulating layers 13 or the occurrence of internal cracks in the insulating layer 13, caused by non-uniform contraction can be effectively prevented.

### EXAMPLES

The present invention will be illustrated in greater detail with reference to the following Examples and Comparative Examples, but the invention should not be construed as being limited thereto.

### Example 1

A base film 2 made of a polyethylene terephthalate film a surface of which was subjected to a silicone mold releasing treatment was prepared (see Fig. 5(a)), and a first thin metal layer 4 made of a thin nickel film was formed on the whole surface of the base film 2 to a thickness of 0.08 µm by use of a vacuum deposition apparatus (see Fig. 5(b)).

Then, a plating resist 6 made of a dry film resist was press-bonded onto the whole surface of the first thin metal layer 4 with heat, and thereafter, the plating resist 6 was exposed to light and developed, thereby forming a pattern reverse to a wiring circuit pattern (see Fig. 2(a), however, in this embodiment, the resin layer 3 is omitted).

Then, a second thin metal layer 5 was formed on the first thin metal layer 4 to a thickness of 0.2 µm by electrolytic nickel plating using the first thin metal layer 4 as an electrode (see Fig. 2(b), however, in this embodiment, the resin layer 3 is omitted). Thereafter, the plating resist 6 was removed from the first thin metal layer 4 (see Fig. 2(c), however, in this embodiment, the resin layer 3 is omitted), thereby forming the second thin metal layer 5 on the first thin metal layer 4 in the form of the predetermined wiring circuit pattern (see Fig. 5(c)). Since the adhesion between the first thin metal layer 4 and the plating resist 6 was good, the second thin metal layer 5 could be formed in the form of the predetermined wiring circuit pattern with high precision.

Thereafter, a slurry in which barium titanate was incorporated as a main component ceramic powder and ethyl cellulose was incorporated as a binder was applied onto the first thin metal layer 4 including the second thin metal layer 5, and dried at 100°C to form a ceramic powder-dispersed layer 7 having a thickness of 1.0 µm on the first thin metal layer 4 including the second thin metal layer 5 (see Fig. 5(d)), thereby obtaining a thin metal layers-having ceramic green sheet 1. The slurry could be uniformly applied without being repelled on the first thin metal layer 4 including the second thin metal layer 5, so that the ceramic powder-dispersed layer 7 could be formed as a uniform layer.

Then, 1,000 sheets of the thin metal layers-having ceramic green sheets 1 thus obtained were sequentially stacked after peeling the respective base film 2 for each superposition, and then the resulting laminate was burned at 1,300°C, thereby producing a laminated ceramic capacitor 11 (see Figs. 3, however, in this embodiment, the resin layer 3 is omitted).

A cross section of the laminated ceramic capacitor 11 obtained after burning was observed under an electron microscope. As a result, for the portions of the first thin metal layer 4 on which the second thin metal layer 5 was formed, it was confirmed that spheroidizing was inhibited to form high-precision wiring circuit patterns by the second thin metal layer 5 and the first thin metal layer 4. On the other hand, it was confirmed that the portions of the first thin metal layer 4 on which the second thin metal layer 5 was not formed were spheroidized or segmentalized to form insulating portions. It was further confirmed that separation between the internal electrode 12 and the insulating layer 13, separation between the upper and lower insulating layers 13 or internal cracks in the insulating layer 13 did not developed.

### Comparative Example 1

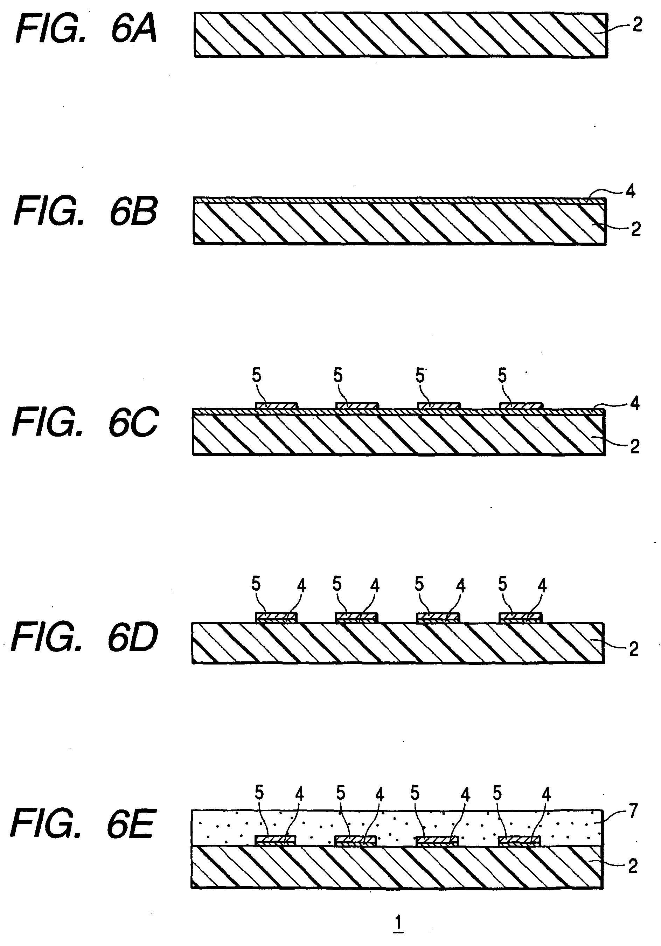

A base film 2 made of a polyethylene terephthalate film a surface of which was subjected to a silicone mold releasing treatment was prepared (see Fig. 6(a)), and a first thin metal layer 4 made of a thin nickel film was formed on the whole surface of the base film 2 to a thickness of 0.08 µm by use of a vacuum deposition apparatus (see Fig. 6(b)).

Then, a plating resist 6 made of a dry film resist was press-bonded onto the whole surface of the first thin metal layer 4 with heat, and thereafter, the plating resist 6 was exposed to light and developed, thereby forming a pattern reverse to a wiring circuit pattern (see Fig. 2(a), however, in this embodiment, the resin layer 3 is omitted).

Then, a second thin metal layer 5 was formed on the first thin metal layer 4 to a thickness of 0.2 µm by electrolytic nickel plating using the first thin metal layer 4 as an electrode (see Fig. 2(b), however, in this embodiment, the resin layer 3 is omitted). Thereafter, the plating resist 6 was removed from the first thin metal layer 4 (see Fig. 2(c), however, in this embodiment, the resin layer 3 is omitted), thereby forming the second thin metal layer 5 on the first thin metal layer 4 in the form of the predetermined wiring circuit pattern (see Fig. 6(c)). Since the adhesion between the first thin metal layer 4 and the plating resist 6 was good, the second thin metal layer 5 could be formed in the form of the predetermined wiring circuit pattern with high precision.

Thereafter, the portions of the first thin metal layer 4 on which the second thin metal layer 5 was not formed (the portions exposed from the second thin metal layer 5) was etched with an aqueous solution of nitric acid, thereby processing the first thin metal layer 4 into a wiring circuit pattern having a shape similar to that of the second thin metal layer 5 (see Fig. 6(d)).

Then, a slurry in which barium titanate was incorporated as a main component ceramic powder and ethyl cellulose was incorporated as a binder was applied onto the base film 2 including the second thin metal layer 5, and dried at 100°C to form a ceramic powder-dispersed layer 7 having a thickness of 1.0 µm on the base film 2 including the second thin metal layer 5 (see Fig. 6(e)), thereby obtaining a thin metal layers-having ceramic green sheet 1.

Thereafter, 1,000 sheets of the thin metal layers-having ceramic green sheets 1 thus obtained were sequentially stacked after peeling the respective base film 2 for each superposition, and then, the resulting laminate was burned at 1,300°C, thereby producing a laminated ceramic capacitor 11 (see Figs. 3, however, in this embodiment, the first thin metal layer 4 is formed to a wiring circuit pattern, and the resin layer 3 is omitted).

A cross section of the laminated ceramic capacitor 11 obtained after burning was observed under an electron microscope. As a result, for the portions of the first thin metal layer 4 on which the second thin metal layer 5 was formed, it was confirmed that spheroidizing was inhibited to form high-precision wiring circuit patterns by the second thin metal layer 5 and the first thin metal layer 4.

However, separation between the internal electrode 12 and the insulating layer 13 and separation between the upper and lower insulating layers 13 were observed, and internal cracks in the insulating layer 13 were also partially observed.

### Example 2

A base film 2 made of a polyethylene terephthalate film a surface of which was subjected to a silicone mold releasing treatment was prepared (see Fig. 1(a)), and a solution of ethyl cellulose, the same material as the binder of the ceramic powder-dispersed layer 7, in a mixed solvent of toluene and monomethyl glycol was applied thereon by spin coating to a thickness of 0.5 µm as a resin layer 3 (see Fig. 1(b)).

Then, a first thin metal layer 4 made of a thin nickel film was formed on the whole surface of the resin layer 3 to a thickness of 0.08 µm by use of a vacuum deposition apparatus (see Fig. 1(c)).

Then, a plating resist 6 made of a dry film resist was press-bonded onto the whole surface of the first thin metal layer 4 with heat, and thereafter, the plating resist 6 was exposed to light and developed, thereby forming a pattern reverse to a wiring circuit pattern (see Fig. 2(a)).

Then, a second thin metal layer 5 was formed on the first thin metal layer 4 to a thickness of 0.2 µm by electrolytic nickel plating using the first thin metal layer 4 as an electrode (see Fig. 2(b)). Thereafter, the plating resist 6 was removed from the first thin metal layer 4 (see Fig. 2(c)), thereby forming the second thin metal layer 5 on the first thin metal layer 4 in the form of the predetermined wiring circuit pattern (see Fig. 1(d)). Since the adhesion between the first thin metal layer 4 and the plating resist 6 was good, the second thin metal layer 5 could be formed in the form of the predetermined wiring circuit pattern with high precision.

Thereafter, a slurry in which barium titanate was incorporated as a main component ceramic powder and ethyl cellulose was incorporated as a binder was applied onto the first thin metal layer 4 including the second thin metal layer 5, and dried at 100°C to form a ceramic powder-dispersed layer 7 having a thickness of 1.0 µm on the first thin metal layer 4 including the second thin metal layer 5 (see Fig. 1(e)), thereby obtaining a thin metal layers-having ceramic green sheet 1. The slurry could be uniformly applied without being repelled on the first thin metal layer 4 including the second thin metal layer 5, so that the ceramic powder-dispersed layer 7 could be formed as a uniform layer.

Then, 1,000 sheets of the thin metal layers-having ceramic green sheets 1 thus obtained were sequentially stacked after peeling the respective base film 2 for each superposition, and then, the resulting laminate was burned at 1,300°C, thereby producing a laminated ceramic capacitor 11 (see Figs. 3).

When the base film 2 was peeled from the resin layer 3 of the thin metal layers-having ceramic green sheet 1 in the production of the laminated ceramic capacitor 11, it was confirmed that the second thin metal layer 5 remained 100% without being separated.

A cross section of the laminated ceramic capacitor 11 obtained after burning was observed under an electron microscope. As a result, for the portions of the first thin metal layer 4 on which the second thin metal layer 5 was formed, it was confirmed that spheroidizing was inhibited to form high-precision wiring circuit patterns by the second thin metal layer 5 and the first thin metal layer 4. On the other hand, it was confirmed that the portions of the first thin metal layer 4 on which the second thin metal layer 5 was not formed were spheroidized or segmentalized to form insulating portions. It was further confirmed that separation between the internal electrode 12 and the insulating layer 13, separation between the upper and lower insulating layers 13 or internal cracks in the insulating layer 13 did not developed.

### Comparative Example 2

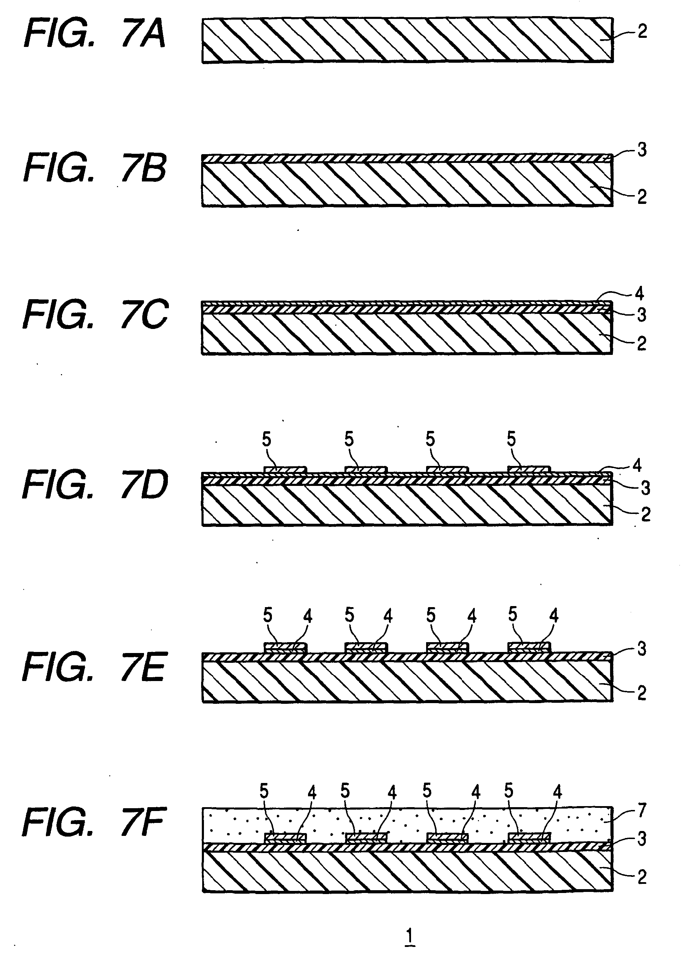

A base film 2 made of a polyethylene terephthalate film a surface of which was subjected to a silicone mold releasing treatment was prepared (see Fig. 7(a)), and a solution of ethyl cellulose, the same material as the binder of the ceramic powder-dispersed layer 7, in a mixed solvent of toluene and monomethyl glycol was applied thereon by spin coating to a thickness of 0.5 µm as a resin layer 3 (see Fig. 7(b)).

Then, a first thin metal layer 4 made of a thin nickel film was formed on the whole surface of the resin layer 3 to a thickness of 0.08 µm by use of a vacuum deposition apparatus (see Fig. 7(c)).

Then, a plating resist 6 made of a dry film resist was press-bonded onto the whole surface of the first thin metal layer 4 with heat, and thereafter, the plating resist 6 was exposed to light and developed, thereby forming a pattern reverse to a wiring circuit pattern (see Fig. 2(a)).

Then, a second thin metal layer 5 was formed on the first thin metal layer 4 to a thickness of 0.2 µm by electrolytic nickel plating using the first thin metal layer 4 as an electrode (see Fig. 2(b)). Thereafter, the plating resist 6 was removed from the first thin metal layer 4 (see Fig. 2(c)), thereby forming the second thin metal layer 5 on the first thin metal layer 4 in the form of the predetermined wiring circuit pattern (see Fig. 7(d)). Since the adhesion between the first thin metal layer 4 and the plating resist 6 was good, the second thin metal layer 5 could be formed in the form of the predetermined wiring circuit pattern with high precision.

Thereafter, the portions of the first thin metal layer 4 on which the second thin metal layer 5 is not formed (portions exposed from the second thin metal layer 5) was etched with an aqueous solution of nitric acid, thereby processing the first thin metal layer 4 into a wiring circuit pattern having a shape similar to that of the second thin metal layer 5 (see Fig. 7(e)).

Then, a slurry in which barium titanate was incorporated as a main component ceramic powder and ethyl cellulose was incorporated as a binder was applied onto the resin layer 3 including the second thin metal layer 5, and dried at 100°C to form a ceramic powder-dispersed layer 7 having a thickness of 1.0 µm on the resin layer 3 including the second thin metal layer 5 (see Fig. 7(f)), thereby obtaining a thin metal layers-having ceramic green sheet 1. The slurry could be uniformly applied without being repelled on the resin layer 3 containing the second thin metal layer 5, so that the ceramic powder-dispersed layer 7 could be formed as a uniform layer.

Then, 1,000 sheets of the thin metal layers-having ceramic green sheets 1 thus obtained were sequentially stacked after peeling the respective base film 2 for each superposition, and then, the resulting laminate was burned at 1,300°C, thereby producing a laminated ceramic capacitor 11 (see Figs. 3, however, in this embodiment, the first thin metal layer 4 is formed into the wiring circuit patter).

When the base film 2 was peeled from the resin layer 3 of the thin metal layers-having ceramic green sheet 1 in the production of the laminated ceramic capacitor 11, it was confirmed that the second thin metal layer 5 remained 100% without being separated.

Further, a cross section of the laminated ceramic capacitor 11 obtained after burning was observed under an electron microscope. As a result, for the portions of the first thin metal layer 4 on which the second thin metal layer 5 was formed, it was confirmed that spheroidizing was inhibited to form high-precision wiring circuit patterns by the second thin metal layer 5 and the first thin metal layer 4.

However, separation between the internal electrode 12 and the insulating layer 13 and separation between the upper and lower insulating layers 13 were observed, and internal cracks in the insulating layer 13 were also partially observed.

As described above, according to the thin metal layers-having ceramic green sheets of the invention, an uniform contraction percentage can be assured by the respective first thin metal layers intervening between the neighboring ceramic powder-dispersed layers over the whole surfaces thereof, thereby allowing the whole ceramic powder-dispersed layers to contract uniformly, at the time of burning a laminate obtained by stacking the ceramic green sheets in the production of the ceramic capacitor.

Therefore, according to the method for producing the ceramic capacitor of the invention, the whole ceramic powder-dispersed layers can be allowed to contract uniformly in the step of burning the thin metal layers-having ceramic green sheets. Accordingly, separation between the internal electrode and the insulating layer, separation between the upper and lower insulating layers or the occurrence of internal cracks in the insulating layer, caused by non-uniform contraction can be effectively prevented, thus making it possible to produce the ceramic capacitor having high reliability.

While the present invention has been described in detail and with reference to specific embodiments thereof, it will be apparent to one skilled in the art that various changes and modifications can be made therein without departing from the spirit and scope thereof.

The present application is based on Japanese Patent Application No. 2002-343754 filed November 27, 2002, the contents thereof being herein incorporated by reference.

## Claims

1. A thin metal layers-having ceramic green sheet comprising:
a base film;
a first thin metal layer formed on the whole surface of said base film;
a second thin metal layer formed on said first thin metal layer in the form of predetermined pattern; and
a ceramic powder-dispersed layer, comprising a binder and a ceramic powder dispersed therein, and being formed on the first thin metal layer surface including the second thin metal layer surface.

2. The thin metal layers-having ceramic green sheet according to claim 1, which further comprises a resin layer interposed between said base film and said first thin metal layer.

3. The thin metal layers-having ceramic green sheet according to claim 2, wherein said resin layer comprises a material substantially the same as the binder of said ceramic powder-dispersed layer.

4. The thin metal layers-having ceramic green sheet according to any one of claims 1 to 3, wherein said first thin metal layer has a thickness of 0.001 to 1.0 µm.

5. The thin metal layers-having ceramic green sheet according to any one of claims 1 to 4, wherein said second thin metal layer has a thickness of twice or more that of the first thin metal layer.

6. The thin metal layers-having ceramic green sheet according to any one of claims 1 to 5, wherein said first thin metal layer is formed by a vacuum film formation process.

7. The thin metal layers-having ceramic green sheet according to any one of claims 1 to 6, wherein said second thin metal layer is formed by electrolytic plating.

8. A method for producing a ceramic capacitor comprising the steps of:
preparing a plurality of the thin metal layers-having ceramic green sheets according to any one of claims 1 to 7;
peeling the base film of one of said plurality of thin metal layers-having ceramic green sheets;
superposing another thin metal layers-having ceramic green sheet on said base film-peeled ceramic green sheet by bringing the ceramic powder-dispersed layer of said another ceramic green sheet into contact with the first thin metal layer or resin layer of said base film-peeled ceramic green sheet;
repeating said peeling step and said superposing step predetermined times to form a laminated product of said plurality of ceramic green sheets; and
burning said laminated product.
